# FASCICULE DE BREVET EUROPEEN

(11) **EP 3 043 908 B1**
(45) Date de publication et mention de la délivrance du brevet: **25.03.2020**
(21) Numéro de dépôt: 14765884.3
(22) Date de dépôt: 28.08.2014
(51) Int. Cl.: B01J 37/34, B01J 19/12, B01J 21/06, B01D 53/32, B01D 53/86

(54) **DISPOSITIF DE TRAITEMENT D'UN COMPOSE COMPRENANT UN ELEMENT PHOTO-CATALYSEUR ACTIVE PAR UN PLASMON GENERE PAR UN ELEMENT D'ACTIVATION ENTERRE, ET NOTAMMENT ACTIVE AVEC UN PLASMA**
VORRICHTUNG ZUR BEHANDLUNG EINER VERBINDUNG MIT EINEM PHOTOKATALYSATORELEMENT, AKTIVIERT DURCH EIN VON EINEM VERBORGENEN AKTIVIERUNGSELEMENT ERZEUGTES PLASMON UND INSBESONDERE DURCH EIN PLASMA
DEVICE FOR TREATING A COMPOUND INCLUDING A PHOTOCATALYST ELEMENT ACTIVATED BY A PLASMON GENERATED BY A BURIED ACTIVATION ELEMENT, AND IN PARTICULAR ACTIVATED WITH A PLASMA

(30) Priorité: 09.09.2013 FR 1358627
(43) Date de publication de la demande: 20.07.2016
(73) Titulaire: Commissariat à l'Énergie Atomique et aux Énergies Alternatives, 75015 Paris (FR)
(72) Inventeur: PERNEL, Carole, F-38120 St Egreve (FR); JOUVE, Michel, F-38470 Vinay (FR); QUESNEL, Etienne, F-38240 Meylan (FR)
(74) Mandataire: Novaimo
(86) Numéro de dépôt international: PCT/EP2014/068283
(87) Numéro de publication internationale: WO 2015/032685

(56) Documents cités:
- FR-A1- 2 904 656
- US-A1- 2008 170 971
- US-B2- 7 295 723
- SANO T ET AL: "Contributions of photocatalytic/catalytic activities of TiO2 and gamma-Al2O3 in nonthermal plasma on oxidation of acetaldehyde and CO", JOURNAL OF MOLECULAR CATALYSIS A: CHEMICAL, ELSEVIER, AMSTERDAM, NL, vol. 245, no. 1-2, 15 février 2006 (2006-02-15), pages 235-241, XP028015539, ISSN: 1381-1169, DOI: 10.1016/J.MOLCATA.2005.10.002 [extrait le 2006-02-15]

## Description

### Domaine technique de l'invention

L'invention concerne le domaine de l'activation de réactions chimiques de décomposition ou de synthèse d'un composé préférentiellement dans un milieu plasma.

L'invention a pour objet plus particulièrement un dispositif de traitement d'un composé comprenant un espace de traitement du composé, un élément photo-catalyseur dont une surface extérieure délimite au moins en partie l'espace de traitement, et un élément d'activation associé à l'élément photo-catalyseur de sorte à générer, sous l'effet d'un rayonnement électromagnétique à une longueur d'onde prédéterminée, un plasmon se propageant dans ledit élément photo-catalyseur.

### État de la technique

Dans le domaine de la catalyse d'un composé en vue de sa dégradation, on distingue à l'heure actuelle deux technologies principales.

La première technologie est la plasma catalyse. Dans ce cas, les plasmas sont des plasmas dits « froids » ou « non-thermiques » fonctionnant à pression atmosphérique et à température ambiante. La décharge plasma est générée par l'application d'une tension entre deux électrodes entre lesquelles circule un air à traiter. La conséquence est l'ionisation des espèces dans l'espace entre les électrodes et donc la génération d'espèces actives capables d'oxyder des composés organiques volatiles (connues sous l'acronyme COV) à température ambiante. L'introduction de catalyseur au voisinage de la décharge permet d'accélérer et d'orienter les réactions, et par voie de conséquence de limiter la génération de sous-produits. Les inconvénients principaux de cette première technologie sont l'énergie que nécessite une conversion complète et l'utilisation de catalyseurs appartenant à la famille des platinoïdes, matériaux extrêmement critiques.

La deuxième technologie est la photo-catalyse. Elle consiste à réaliser une oxydation des COV activée par des ondes électromagnétiques. Le principe repose sur l'activation d'un semi-conducteur (le photo-catalyseur habituellement utilisé est TiO₂) par la lumière. L'adsorption de photons par le semi-conducteur permet de générer des espèces radicalaires très réactives. Les espèces radicalaires ainsi formées peuvent réagir avec les COV contenus dans l'air et les convertir en CO₂. Les inconvénients principaux de la photocatalyse sont la formation non contrôlée de sous-produits résultant d'une oxydation incomplète des COV, la formation d'ozone et des cinétiques de réactions non compatibles avec les débits d'air élevés à traiter.

La photo-catalyse repose sur la capacité du matériau photo-actif à absorber des photons. Cette absorption de lumière génère au sein du matériau des paires électron-trou, qui se dissocient électron libre dans la bande de conduction et trou dans la bande de valence. Le matériau TiO₂ présente d'excellentes propriétés photo-catalytiques pour les applications environnementales. Il n'est pas loin d'être le photo-catalyseur idéal : bas coût, stable chimiquement, et les trous photo-générés sont très oxydants. Cela dit, des inconvénients majeurs limitent l'efficacité du TiO₂ en tant que photo-catalyseur :
- le rendement quantique est faible (1%), ainsi les charges se recombinent et l'énergie se dissipe thermiquement,
- la cinétique de dégradation des COV est relativement lente.

Pour limiter les phénomènes de recombinaison des charges, certains ajoutent de l'ozone ou encore un co-catalyseur métallique qui permet de mieux séparer les charges et de piéger les électrons. L'ajout d'un co-catalyseur au photo-catalyseur TiO₂ améliore notablement les performances catalytiques en particulier les métaux nobles (Pt, Pd). Cependant, le co-catalyseur placé sur la surface de traitement du photo-catalyseur, c'est-à-dire en contact avec le composé à oxyder, a aussi tendance à s'oxyder dans le temps, il en résulte que le rendement du photo-catalyseur baisse petit à petit.

L'association du plasma avec le photo-catalyseur TiO₂ a également fait l'objet d'études comme en témoigne le document FR2892950. Cependant, les réalisations du document FR2892950 présentent certains inconvénients du fait de la photo-activation du TiO₂ par des rayonnements ultraviolets. En effet, les lampes UV sont encombrantes, ont une durée de vie courte, et consomment beaucoup d'énergie (800W pour l'activation lumineuse contre 400W pour la génération du plasma pour traiter un débit d'air de 250m³/h).

Le document US2008/170971 également concerne un dispositif utilisant une décharge plasma associée à un élément photo-catalyseur.

Le document US7295723 concerne un dispositif utilisant une technique de photo-catalyse avec utilisation d'un plasmon.

### Objet de l'invention

Le but de la présente invention est de proposer une solution qui remédie au moins en partie aux inconvénients listés ci-dessus.

On tend à satisfaire ce but en ce que l'élément photo-catalyseur est interposé entre l'élément d'activation et l'espace de traitement.

De préférence, l'élément d'activation n'est pas en contact avec le composé lorsque ce dernier est présent dans l'espace de traitement.

De préférence, l'élément photo-catalyseur et l'élément d'activation sont agencés de telle sorte que le plasmon génère un champ électrique amplifiant la génération de charges dans une zone de contact entre l'élément photo-catalyseur avec ledit élément d'activation, lesdites charges participant à une stimulation de l'effet catalytique dudit élément photo-catalyseur.

Avantageusement, le dispositif de traitement comporte un système de génération d'un plasma dans l'espace de traitement au moins au niveau de la surface extérieure de l'élément photo-catalyseur. Par exemple, le système de génération du plasma comporte au moins une première électrode et au moins une deuxième électrode disposées de part et d'autre d'un séparateur comprenant au moins une couche d'un matériau diélectrique. Le dispositif peut aussi comporter une pluralité de premières électrodes, notamment reliées à la masse, disposées sur une même face du séparateur, un élément photo-catalyseur associé à un élément d'activation étant disposé entre chaque couple de premières électrodes adjacentes.

En outre, le dispositif de traitement peut comporter une pluralité de deuxièmes électrodes, notamment reliées à une source électrique haute tension, disposées sur une même face du séparateur, un élément photo-catalyseur associé à un élément d'activation étant disposé entre chaque couple de deuxièmes électrodes adjacentes.

Selon un perfectionnement, l'élément séparateur comporte un élément de propagation et/ou de génération dudit rayonnement électromagnétique.

Selon une réalisation, l'élément d'activation se présente sous la forme d'un film, notamment semi-transparent, en métal d'épaisseur nanométrique.

Selon une autre réalisation, l'élément d'activation comporte une pluralité de catalyseurs, de préférence métalliques, exaltant des propriétés plasmoniques lors d'une exposition audit rayonnement électromagnétique de longueur d'onde prédéterminée. Par exemple, les catalyseurs la pluralité de catalyseurs se présentent sous la forme de sphères et/ou d'étoiles et/ou de bâtonnets partiellement et/ou totalement recouverts par ledit élément photo-catalyseur.

Selon un perfectionnement, l'élément photo-catalyseur comporte une jonction entre un matériau dopé d'un premier type et un matériau dopé d'un deuxième type opposé au premier type afin de permettre l'extraction des électrons générés en son sein, notamment par le plasmon, vers la surface extérieure dudit élément photo-catalyseur.

L'élément photo-catalyseur peut comporter au moins un matériau d'oxyde métallique choisi parmi : un oxyde de titane, un oxyde de fer ou un oxyde de cuivre.

L'élément d'activation peut comporter au moins un matériau choisi parmi l'argent ou l'or.

L'invention est aussi relative à un procédé d'utilisation d'un dispositif de traitement tel que décrit, ledit procédé comportant une étape de traitement d'un composé, notamment d'effluents gazeux, par au moins une action de l'élément photo-catalyseur sur ledit composé présent dans l'espace de traitement, ladite action étant résultante d'une étape d'exposition de l'élément photo-catalyseur et de l'élément d'activation au rayonnement électromagnétique à la longueur d'onde prédéterminée générant le plasmon se propageant dans ledit élément photo-catalyseur.

Par ailleurs, l'étape de traitement peut comporte une étape de formation d'un plasma dans l'espace de traitement au cours de la mise en œuvre de l'étape d'exposition au rayonnement électromagnétique à la longueur d'onde prédéterminée.

Selon un perfectionnement, le procédé comporte une étape de régénération de l'élément photo-catalyseur, ladite étape de régénération étant mise en œuvre par un flash plasma entre deux étapes de traitement.

### Description sommaire des dessins

D'autres avantages et caractéristiques ressortiront plus clairement de la description qui va suivre des modes particuliers de réalisation de l'invention donnés à titre d'exemples non limitatifs et représentés sur les dessins annexés, dans lesquels :
- la figure 1 est une vue en coupe transversale d'un dispositif de traitement d'un composé selon un mode d'exécution particulier de l'invention,
- les figures 2 à 5 illustrent des vues en coupes transversales de différentes variantes de réalisation,
- les figures 6 et 7 illustrent deux modes d'exécution particuliers mettant en œuvre la plasma-photo-catalyse,
- la figure 8 illustre un perfectionnement permettant d'exacerber le rendement du dispositif de traitement.

### Description de modes préférentiels de l'invention

Le dispositif décrit ci-après diffère de l'état de la technique en ce que le co-catalyseur, appelé ci-après élément d'activation, est placé judicieusement de sorte à ne pas être en contact avec le composé à traiter. Ceci permet alors d'éviter son oxydation tout en facilitant la régénération de l'élément photo-catalyseur.

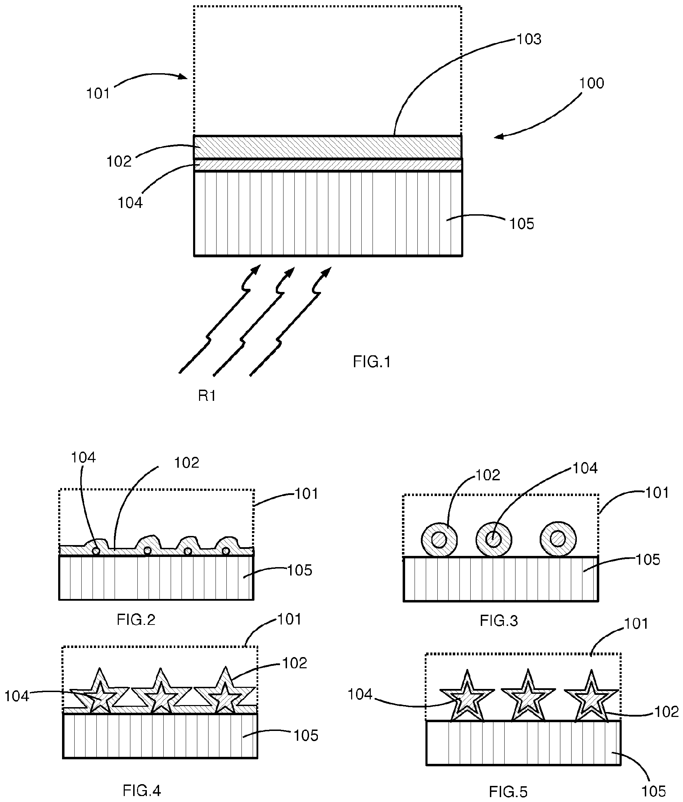

Ainsi, comme illustré à la figure 1, le dispositif de traitement 100 d'un composé comprend un espace de traitement 101 (représenté en pointillés) dudit composé.

L'espace de traitement 101 peut être rempli par le composé à traiter. Lorsque le composé à traiter est un gaz, il peut former un effluent gazeux qui traverse l'espace de traitement 101. Au cours de son passage dans l'espace de traitement 101, cet effluent pourra être traité notamment par l'élément photo-catalyseur décrit ci-après.

En particulier, le composé peut comporter un ou plusieurs COV comme par exemple le Benzène, le Toluène, l'Ethylbenzène, le Xylène, le formaldéhyde, l'éthanol ...

Le dispositif de traitement 100 comporte en outre un élément photo-catalyseur 102 dont une surface extérieure 103 délimite au moins en partie l'espace de traitement 101. L'élément photo-catalyseur 102 est tel que lorsqu'il est soumis à un rayonnement électromagnétique il est apte à dégrader/détruire le composé au niveau de sa surface extérieure 103 en contact avec ledit composé.

L'élément photo-catalyseur 102 peut comporter, ou être constitué par, un oxyde de titane, notamment sous sa forme TiO₂ (dioxyde de titane). En particulier, lorsque le TiO₂ est activé par un rayonnement électromagnétique, ce dernier conduit, à la surface extérieure de l'élément photo-catalyseur 102 lorsque le composé est présent dans l'espace de traitement, à la formation de radicaux hydroxyles et superoxydes aptes à attaquer les composés organiques adsorbés sur le TiO₂ en les dégradant jusqu'à minéralisation totale de la matière organique. Bien que l'exemple de l'oxyde de titane ait été donné, il est possible d'utiliser d'autres matériaux agissant sur le même principe. Ainsi, de manière générale, l'élément photo-catalyseur 102 peut comporter, ou être constitué par, au moins un matériau d'oxyde métallique choisi parmi : un oxyde de titane (tel que décrit ci-dessus), un oxyde de fer (notamment sous sa forme Fe₂O₃), un oxyde de cuivre (notamment sous sa forme CuₓO_{y}, avec 1≤x≤2 et 1≤y≤2), et plus généralement un oxyde métallique absorbant dans le visible (Cr₂O₃, CoO₂, NiO, V₂O₃, WO₃, ZnO, etc.). Autrement dit, la présence d'un matériau photo-actif de type oxyde formant l'élément photo-catalyseur 102 est favorable à l'adsorption des espèces chimiques, et est donc favorable à l'oxydation catalytique.

En outre, le dispositif 100 comporte un élément d'activation 104 associé à l'élément photo-catalyseur 102 de sorte à générer, sous l'effet d'un rayonnement électromagnétique R1 à une longueur d'onde prédéterminée, un plasmon se propageant dans ledit élément photo-catalyseur 102. On comprend que cette association est telle que l'élément d'activation 104 soumis au rayonnement permet la formation du plasmon et que l'agencement de l'élément d'activation 104 par rapport à l'élément photo-catalyseur 102 permet la propagation du plasmon dans l'élément photo-catalyseur 102. Autrement dit, l'élément photo-catalyseur 102 et l'élément d'activation 104 sont agencés de telle sorte que le plasmon génère, en particulier grâce au phénomène de résonnance plasmonique, un champ électrique amplifiant la génération de charges (trous et électrons) dans une zone de contact entre l'élément photo-catalyseur 102 avec ledit élément d'activation 104, lesdites charges participant à une stimulation de l'effet catalytique dudit élément photo-catalyseur 102.

On comprend aussi que le rayonnement électromagnétique à la longueur d'onde prédéterminée peut permettre aussi à lui seul de participer à la photo-catalyse induite par l'élément photo-catalyseur 102.

L'élément photo-catalyseur 102 est interposé entre l'élément d'activation 104 et l'espace de traitement 101. Ainsi, on comprend que l'élément d'activation 104 n'est pas en contact avec le composé lorsque ce dernier est présent dans l'espace de traitement 101. Il en résulte que le traitement du composé, notamment son oxydation, n'aura pas d'effets néfastes sur l'interaction entre l'élément d'activation 104 et l'élément photo-catalyseur 102. En outre, la surface extérieure 103 permettant l'oxydation/la destruction du composé sera plus facile à régénérer en cas d'encrassement. Par ailleurs, la surface disponible de l'élément photo-catalyseur 102 destinée à traiter le composé sera d'autant plus grande qu'elle ne sera pas ombrée par l'élément d'activation 104.

L'élément d'activation 104 peut comporter au moins un matériau choisi parmi l'argent ou l'or, ou être constitué par l'un de ces matériaux ou un alliage de ces matériaux. Il est possible de choisir des métaux non-nobles (Cu, Co, Ni, V, W, Cr, etc.) susceptibles de s'oxyder du fait que le dispositif sera avantageusement configuré de sorte à protéger ledit élément d'activation 104 par exemple en l'encapsulant.

Par ailleurs, afin d'assurer la propagation du plasmon dans l'élément photo-catalyseur 102, il est préférable qu'au moins une partie de l'élément d'activation 104 soit en contact avec l'élément photo-catalyseur 102.

Selon un premier mode de mise en œuvre de l'élément d'activation 104 visible à la figure 1, ce dernier se présente sous la forme d'un film, notamment semi-transparent, en métal d'épaisseur nanométrique (selon une gamme d'épaisseur de 1nm à 30nm selon le métal).

Selon un deuxième mode de mise en œuvre de l'élément d'activation 104 visible aux figures 2 à 5, ce dernier comporte une pluralité de catalyseurs, de préférence métalliques, exaltant des propriétés plasmoniques lors d'une exposition audit rayonnement électromagnétique de longueur d'onde prédéterminée, de préférence lesdits catalyseurs de la pluralité de catalyseurs sont chacun en contact avec l'élément photo-catalyseur 102. Chacun des catalyseurs de la pluralité de catalyseurs forme donc avantageusement un élément unitaire dissocié des autres, et de préférence en métal nano-structuré dans un matériau métallique tel que visé ci-avant.

De préférence, les catalyseurs de la pluralité de catalyseurs se présentent sous la forme de sphères (figures 2 et 3) et/ou d'étoiles (figures 4 et 5) et/ou de bâtonnets (non représentés) partiellement (figures 2 et 4) ou totalement (figures 3 et 5) recouverts par ledit élément photo-catalyseur 102. Aux figures 2 et 4, les catalyseurs de la pluralité de catalyseurs de l'élément d'activation 104 sont en contact à la fois avec un support 105 et l'élément photo-catalyseur 102, les catalyseurs sont alors encapsulés par le support 105 et l'élément photo-catalyseur 102. Aux figures 3 et 5, les catalyseurs de la pluralité de catalyseurs de l'élément d'activation 104 sont uniquement en contact avec l'élément photo-catalyseur 102 car ils sont entièrement recouverts/encapsulés par ce dernier. Bien entendu, un même dispositif peut aussi comporter un ensemble de catalyseurs de la pluralité de catalyseurs uniquement en contact avec l'élément photo-catalyseur 102 et un autre ensemble de catalyseurs de la pluralité de catalyseurs encapsulés par le support 105 et l'élément photo-catalyseur 102. Le support 105 peut comporter, ou être constitué par, un diélectrique (par exemple du verre ou un quartz) et être avantageusement transparent au rayonnement électromagnétique de longueur d'onde prédéterminée. Dans le cadre des réalisations des figures 4 et 5 utilisant des étoiles, il y a formation d'un plasmon au niveau de chacune des pointes des étoiles, pour optimiser cette génération de plasmon, le dépôt de l'élément photo-catalyseur 102 est réalisé de manière conforme sur les différentes étoiles formant la pluralité de catalyseurs de l'élément d'activation 104.

Aux figures 2 à 5, les pointillés représentent l'espace de traitement 101.

De préférence l'élément d'activation 104 présente une surface recouverte par l'élément photo-catalyseur 102 telle que la surface extérieure 103 de l'élément photo-catalyseur 102 soit maximisée en vue d'augmenter le rendement de traitement du composé. Autrement dit, de manière plus générale, la surface extérieure 103 de l'élément photo-catalyseur 102 est avantageusement structurée de sorte à augmenter sa surface spécifique, et par conséquent permettre une augmentation du rendement catalytique. Ainsi, la surface extérieure 103, définie comme étant celle en contact avec le composé à traiter, peut être formée par une pluralité de cavités et/ou de protubérances.

Pour obtenir une stimulation catalytique par effet plasmonique, les dimensions des catalyseurs de la pluralité de catalyseurs (formés par exemple par des nanostructures métalliques) destinées à générer le plasmon sont avantageusement contrôlées. Il en va de même pour l'épaisseur de l'élément photo-catalyseur 102 (se présentant notamment sous la forme d'une couche de matériau photo-actif enrobant tout ou partie des nanostructures métalliques). Typiquement, les dimensions des catalyseurs de la pluralité de catalyseurs seront adaptées en fonction de la longueur d'onde du rayonnement électromagnétique souhaité, et l'épaisseur de l'élément photo-catalyseur 102 sera telle que le plasmon puisse se propager dans toute l'épaisseur voir au-delà pour amplifier la génération de paires électrons-trous dans tout le volume occupé par l'élément photo-catalyseur 102 et avec la surface extérieure 103 de l'élément photo-catalyseur 102 en regard du composé à traiter.

Dans le deuxième mode de mise en œuvre de l'élément d'activation 104, l'enterrement de particules métalliques formant les catalyseurs de la pluralité de catalyseurs, sous un film en matériau photo-actif formant l'élément photo-catalyseur 102, permet d'amplifier de la génération d'excitons dans le matériau photo-actif sous l'effet du rayonnement électromagnétique de longueur d'onde prédéterminée correspondant à la longueur d'onde absorbée par le plasmon.

Par ailleurs, l'utilisation de particules métalliques enterrées sous forme nanométriques présente au premier ordre moins de probabilité de migration dans l'air contrairement au système à base de nano-particules de TiO₂ utilisé dans les systèmes de traitement existants de l'air basés sur la photo-catalyse.

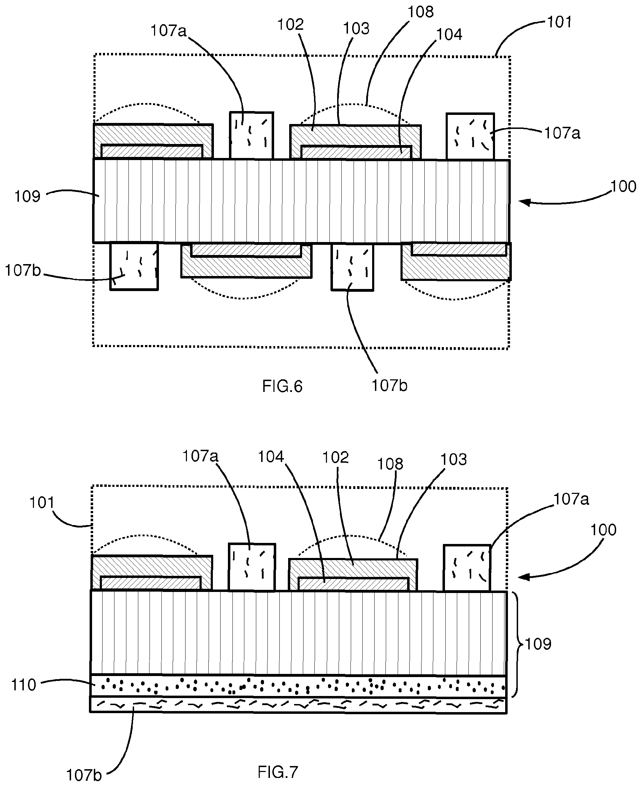

Le présent dispositif peut avantageusement comporter les moyens nécessaires à une plasma catalyse. En ce sens, comme illustré aux figures 6 et 7, le dispositif de traitement 100 peut comporter un système de génération 107a, 107b d'un plasma 108 (représenté selon un arc en pointillés) dans l'espace de traitement 101 au moins au niveau de la surface extérieure 103 de l'élément photo-catalyseur 102. L'utilisation d'un plasma 108 en combinaison avec l'élément photo-catalyseur 102 lui-même associé à l'élément d'activation 104 induit un effet synergique des deux techniques de traitement (photo-catalyse et plasma-catalyse) améliorant le traitement du composé. En conséquence, l'amplification de la génération de charges (trous-électrons) dans l'élément photo-catalyseur 102 dans la zone de contact direct avec l'élément d'activation 102 permet une stimulation de l'effet catalytique favorisée par la présence du plasma car ce dernier est un milieu ionique donc chargé et sensible aux variations de champs électriques, renforçant ainsi la probabilité d'interaction entre les espèces du plasma (réactifs) et la surface extérieure 103.

Par ailleurs, en fonction du matériau photo-actif choisi pour former l'élément photo-catalyseur 102 et de la nano-structure des particules métalliques formant l'élément d'activation 104 (ou de la couche nanométrique formant l'élément d'activation 104), la longueur d'onde prédéterminée de l'onde électromagnétique sera avantageusement dans le visible plutôt que dans l'ultraviolet. Le choix de matériau photo-actif activable dans le visible tel que l'oxyde de fer, l'oxyde de cuivre (notamment sous sa forme CuₓO_{y}, avec 1≤x≤2 et 1≤y≤2), ou encore un oxyde métallique absorbant dans le visible (Cr₂O₃, CoO₂, NiO, V₂O₃, WO₃, ZnO, etc.), est rendu possible par la séparation de charge induite par la présence avantageuse du plasma. Sans plasma, l'utilisation dans le visible serait possible mais moins efficace.

Autrement dit, l'élément photo-catalyseur et l'élément d'activation sont tels que le plasmon généré soit issu d'un rayonnement électromagnétique de longueur d'onde dans le visible. De préférence, cette longueur d'onde dans le visible est comprise entre 400nm et 800nm.

De préférence, le système de génération du plasma 108 comporte au moins une première électrode 107a et au moins une deuxième électrode 107b disposées de part et d'autre d'un séparateur 109 comprenant au moins une couche d'un matériau diélectrique (par exemple en quartz). Autrement dit, le système de génération de plasma est du type à génération de plasma DBD (acronyme de l'anglais Dielectric Barrier Discharge) de surface. De préférence, les première et deuxième électrodes sont telles que le plasma, lorsqu'il est formé, vient « lécher » la surface extérieure 103 de chaque élément photo-catalyseur 102. Les première et deuxième électrodes sont avantageusement en cuivre.

Sur l'exemple des figures 6 et 7, le dispositif de traitement 100 comporte une pluralité de premières électrodes 107a, notamment reliées à la masse, disposées sur une même face du séparateur 109. Un élément photo-catalyseur 102 associé à un élément d'activation 104 est alors disposé entre chaque couple de premières électrodes 107a adjacentes. Ceci permet notamment la formation d'une pluralité de surface extérieures 103 délimitant en partie l'espace de traitement 101 en vue d'améliorer le rendement.

Sur l'exemple de la figure 6, le dispositif peut comporter une pluralité de deuxièmes électrodes 107b, notamment reliées à une source haute tension, disposées sur une même face du séparateur 109, un élément photo-catalyseur 102 associé à un élément d'activation 104 étant disposé entre chaque couple de deuxièmes électrodes adjacentes. On comprend alors que la face du séparateur portant les premières électrodes 107a est opposée à la face de l'élément séparateur 109 portant les deuxièmes électrodes 107b.

Sur l'exemple de la figure 7, le dispositif peut comporter une unique deuxième électrode 107b, notamment reliée à une source haute tension, disposée sur une face du séparateur 109 opposée la face du séparateur 109 portant les premières électrodes 107a.

De préférence, la, ou les, première(s) électrode(s) 107a et/ou la, ou les, deuxième(s) électrode(s) 107b ne sont ni en contact avec l'élément d'activation 104, ni en contact avec l'élément photo-catalyseur 102. Par ailleurs, l'élément photo-catalyseur 102 recouvre l'élément d'activation 104 de telle sorte que ce dernier ne soit pas en contact avec le plasma lors de sa génération.

Par « source haute tension » on entend un voltage compris entre 1kV et 60kV, de préférence entre 5kV et 15kV, et avantageusement égal à 10kV.

On comprend de ce qui a été dit ci-dessus qu'un rayonnement électromagnétique doit atteindre au moins l'élément d'activation 104 afin de générer le plasmon et le propager dans l'élément photo-catalyseur 102. En ce sens, le dispositif de traitement 100 peut comporter une source d'émission du rayonnement électromagnétique à la longueur d'onde prédéterminée. Cette source peut, par exemple, être constituée par des ampoules, en particulier des diodes électroluminescentes, dont la lumière émise correspond au rayonnement électromagnétique à la longueur d'onde prédéterminée.

Par exemple à la figure 6 une telle source pourrait être disposée autour de l'espace de traitement et converger vers les différentes surfaces 103 des éléments photo-catalyseurs 102.

Selon une réalisation particulière illustrée à la figure 7, l'élément séparateur 109 comporte un élément de propagation 110 et/ou de génération dudit rayonnement électromagnétique. Cet élément de propagation 110 et/ou de génération peut être formé par une ou plusieurs couches d'un empilement formant l'élément séparateur 109 et dont la direction d'empilement s'étend entre la, ou les, première(s) électrode(s) et la, ou les, deuxième(s) électrode(s). Bien que cet élément de propagation ne soit illustré qu'à la figure 7, il peut aussi être présent dans l'élément séparateur 109 de la réalisation de la figure 6, ou encore faire partie du support 105 ou constituer le support 105 des figures 1 à 5.

Dans le cadre d'une telle intégration de l'élément de propagation et/ou de génération du rayonnement, il est possible d'obtenir un dispositif extrêmement compact et extrêmement actif car le plasma, la lumière et le catalyseur sont localisés sur la même surface (la surface extérieure de l'élément photo-catalyseur). Si la surface diffusante de lumière dispose des propriétés électriques lui permettant de remplir la fonction du diélectrique servant à la génération du plasma DBD (comme le quartz par exemple), le dispositif peut consister en l'empilement de plusieurs plaques générant des nappes plasma et la lumière aux voisinages des sites catalytiques. Les sites catalytiques sont les sites où le champ électrique local est amplifié, c'est-à-dire là où le matériau photo-actif génère le plus de charges (dans la zone de propagation des plasmons induits par les nano-particules métalliques sous-jacentes sur une épaisseur typique de quelques nanomètres).

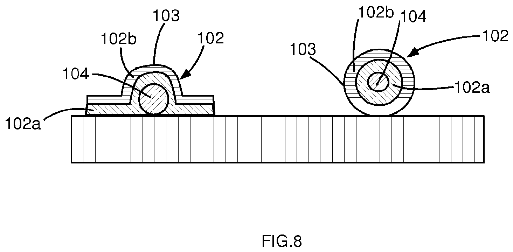

Selon une réalisation applicable à tous les modes de réalisation et illustrée schématiquement à la figure 8, l'élément photo-catalyseur (102) peut comporter une jonction entre un matériau dopé d'un premier type 102a et un matériau dopé d'un deuxième type 102b opposé au premier type. Ceci permet notamment l'extraction des électrons générés dans l'élément photo-catalyseur 102, en particulier par le plasmon, vers la surface extérieure 103 dudit élément photo-catalyseur 102 (plus particulièrement, le rôle de la jonction est de générer un champ électrique perpendiculaire au bi-couches 102a/102a et qui s'étend dans l'épaisseur de ce bi-couches nano-métallique, il facilite donc l'extraction des charges générées dans le bi-couches). En fait, le matériau dopé du premier type 102a est en contact avec l'élément d'activation 104 et s'étend de ce dernier, par ailleurs le matériau dopé du deuxième type 102b est en contact avec le matériau dopé du premier type 102a et s'étend de ce dernier.

En fait, la jonction est telle qu'elle limite les recombinaisons de charges créées dans le matériau de l'élément photo-catalyseur 102 en contact avec l'élément d'activation 104. Le choix des matériaux semi-conducteurs (dopé du premier type et du deuxième type) dépend du champ électrique local que l'on souhaite créer. Par exemple une hétérojonction p/n formée par Cu2O/ZnO :Al crée une tension interne d'environ 0.7V largement suffisante pour faire migrer des électrons générés dans Cu2O à la surface de la coquille de ZnO :Al en contact avec le composé à traiter. L'avantage de cette solution par jonction (aussi appelée cœur-coquille si le matériau dopé du premier type recouvre entièrement l'élément d'activation et est lui-même entièrement recouvert par le matériau dopé du deuxième type, dans la structure cœur-coquille il n'y a que deux matériaux) est qu'en fonction des matériaux photo-actifs semi-conducteurs choisis, le champ électrique local pourra être rentrant ou sortant, il influencera alors l'orientation des réactions catalytiques de surface. En fonction de l'orientation du champ électrique local, les réactions seront de type oxydation (perte d'électron) ou réduction (gain d'électron).

L'invention est aussi relative à un procédé d'utilisation d'un dispositif de traitement tel que décrit. Un tel procédé comporte une étape de traitement d'un composé, notamment d'effluents gazeux, par au moins une action de l'élément photo-catalyseur 102 sur ledit composé présent dans l'espace de traitement 101. L'action est résultante d'une étape d'exposition de l'élément photo-catalyseur 102 et de l'élément d'activation 104 au rayonnement à la longueur d'onde prédéterminée générant le plasmon se propageant dans ledit élément photo-catalyseur 102.

L'étape de traitement peut comporter une étape de formation d'un plasma dans l'espace de traitement 101 au cours de la mise en œuvre de l'étape d'exposition au rayonnement électromagnétique à la longueur d'onde prédéterminée. Ceci a pour effet d'exacerber le rendement du traitement comme expliqué ci-avant. En particulier, le plasma généré l'est au moins au niveau de la surface extérieure 103 de l'élément photo-catalyseur délimitant au moins en partie l'espace de traitement 101.

Avantageusement, le procédé comporte une étape de régénération de l'élément photo-catalyseur, ladite étape de régénération étant mise en œuvre par un flash plasma entre deux étapes de traitement. Cette étape de régénération permet de pallier aux chutes de rendement de l'élément photo-catalyseur 102 dues à un encrassement de ce dernier. Le flash plasma peut consister en un plasma court (1s à 10min) très énergétique (c'est-à-dire de tension supérieure à 20kV et de fréquence supérieure à 1000Hz).

Le dispositif tel que décrit ci-avant (ainsi que son procédé d'utilisation associé) peut avantageusement être utilisé dans le domaine du traitement d'un air vicié provenant en particulier d'un espace confiné, par exemple en sortie d'un bâtiment d'habitat ou tertiaire, d'une unité de peinture (le composé est alors formé par des vapeurs de peinture) ou encore les transports tels que l'automobile, l'aéronautique, le ferroviaire ou le nautisme. Plus particulièrement, l'utilisation d'un tel dispositif peut inclure les concepts de piles à combustible ou tout type de synthèse chimique (par exemple synthèse dans un réacteur plasma).

En particulier, le dispositif de traitement, dans sa configuration combinant la photo-catalyse et la plasma catalyse, favorise trois paramètres décisifs : l'absorption lumineuse, l'ancrage des nano-particules catalytiques, l'adsorption des réactifs aux voisinages des sites catalytiques. En ce sens :
- l'absorption lumineuse par le photo-catalyseur est amplifié et rendue possible pour des longueurs d'onde dans le visible: des matériaux photo-catalytiques connus pour leur forte propension à la recombinaison de charge et donc non utilisable selon les techniques de l'art antérieur comme Fe₂O₃, CuₓO_{y}, etc. pourront devenir performants. L'intérêt réside principalement dans la possibilité d'utiliser la lumière visible pour activer le matériau photo-actif dans le plasma. Ainsi, une simplification du système optique est possible.
- le métal plasmonique (l'élément d'activation) est enterré ou enrobé : ainsi il est moins sensible au vieillissement induit par le milieu oxydant que représente le plasma. En cas de désactivation du matériau photo-actif en raison de l'encrassement, une régénération est possible par un flash plasma (oxydation complète des résidus de surface),
- le matériau photo-actif qui se trouve en surface est de nature oxyde : il est donc favorable à l'adsorption d'espèces radicalaires et oxydes. D'autre part, la modulation de l'effet plasmonique peut rendre modulable les mécanismes de surface comme l'adsorption, la diffusion et la réaction puisqu'il y a modification de la barrière énergétique du travail de sortie du matériau. L'effet plasmonique est alors considéré comme un « ascenseur énergétique» pour les électrons.

De préférence, lorsque l'élément d'activation 104 est une couche/film continue elle a une épaisseur comprise entre 10nm et 30nm, et lorsqu'il se présente sous la forme de particules (pluralité de catalyseurs) le diamètre de ces particules est de préférence compris entre 2nm et 100nm. L'élément photo-catalyseur 102 présente quant à lui une épaisseur de préférence comprise entre 1nm et 100nm. Dans le cadre du bi-couches 102a, 102b (exemple de la jonction) le matériau dopé du premier type présente une épaisseur inférieure à 50nm et le matériau dopé du deuxième type présente aussi une épaisseur inférieure à 50nm de sorte à augmenter le champ moyen dans le bi-couches.

Selon un exemple particulier concernant la dépollution de l'air par un procédé de plasma-catalyse utilisant le dispositif décrit ci-avant, on va chercher à convertir un polluant (exemple le toluène) en CO2+H2O. Dans l'exemple, le dispositif est tel que des nano-particules d'Ag (5-20 nm) ont été déposées par procédé PVD magnetron . Elles ont ensuite été recouvertes d'un film mince (2-3 nm) d'alumine. L'effet plasmonique a été caractérisé par spectroscopie UV-visible. L'absorption plasmonique se situe à la longueur d'onde d'environ λ = 445nm. Le catalyseur a été mis en œuvre dans un plasma atmosphérique surfacique et éclairé dans le même temps par un système de LED bleues. Dans l'exemple du toluène, en travaillant à 20ppm (concentration facilement accessible en direct sans système de pré-concentration par chromatographie en phase gazeuse), les résultats obtenus ont été comparés à plusieurs systèmes représentatifs de l'effet thermique, l'effet photo-catalytique, l'effet plasma-catalytique. Il a pu être noté une synergie avantageuse du plasma et du plasmon sur la décomposition catalytique du Toluène.

## Revendications

1. Dispositif de traitement (100) d'un composé comprenant un espace de traitement (101) du composé, **caractérisé en ce qu'**il comporte :
- un élément photo-catalyseur (102) dont une surface extérieure (103) délimite au moins en partie l'espace de traitement (101),
- un élément d'activation (104) associé à l'élément photo-catalyseur (102) de sorte à générer, sous l'effet d'un rayonnement électromagnétique à une longueur d'onde prédéterminée, un plasmon se propageant dans ledit élément photo-catalyseur (102), ledit élément photo-catalyseur (102) étant interposé entre l'élément d'activation (104) et l'espace de traitement (101),
- un système de génération (107a, 107b) d'un plasma (108) dans l'espace de traitement (101) au moins au niveau de la surface extérieure (103) de l'élément photo-catalyseur (102).

2. Dispositif selon la revendication précédente, **caractérisé en ce que** l'élément d'activation (104) n'est pas en contact avec le composé lorsque ce dernier est présent dans l'espace de traitement (101).

3. Dispositif selon l'une quelconque des revendications précédentes, **caractérisé en ce que** l'élément photo-catalyseur (102) et l'élément d'activation (104) sont agencés de telle sorte que le plasmon génère un champ électrique amplifiant la génération de charges dans une zone de contact entre l'élément photo-catalyseur (102) avec ledit élément d'activation (104), lesdites charges participant à une stimulation de l'effet catalytique dudit élément photo-catalyseur (102).

4. Dispositif selon l'une quelconque des revendications précédentes, **caractérisé en ce que** le système de génération (107a, 107b) du plasma (108) comporte au moins une première électrode (107a) et au moins une deuxième électrode (107b) disposées de part et d'autre d'un séparateur (109) comprenant au moins une couche d'un matériau diélectrique.

5. Dispositif selon la revendication précédente, **caractérisé en ce qu'**il comporte une pluralité de premières électrodes (107a), notamment reliées à la masse, disposées sur une même face du séparateur (109), un élément photo-catalyseur (102) associé à un élément d'activation (104) étant disposé entre chaque couple de premières électrodes adjacentes (107a).

6. Dispositif selon la revendication 4 ou la revendication 5, **caractérisé en ce qu'**il comporte une pluralité de deuxièmes électrodes (107b), notamment reliées à une source électrique haute tension, disposées sur une même face du séparateur (109), un élément photo-catalyseur (102) associé à un élément d'activation (104) étant disposé entre chaque couple de deuxièmes électrodes adjacentes (107b).

7. Dispositif selon l'une quelconque des revendications 4 à 6, **caractérisé en ce que** l'élément séparateur (109) comporte un élément (110) de propagation et/ou de génération dudit rayonnement électromagnétique.

8. Dispositif selon l'une quelconque des revendications précédentes, **caractérisé en ce que** l'élément d'activation (104) se présente sous la forme d'un film, notamment semi-transparent, en métal d'épaisseur comprise entre 1 nm et 30 nm.

9. Dispositif selon l'une quelconque des revendications 1 à 7, **caractérisé en ce que** l'élément d'activation (104) comporte une pluralité de catalyseurs, de préférence métalliques, exaltant des propriétés plasmoniques lors d'une exposition audit rayonnement électromagnétique de longueur d'onde prédéterminée.

10. Dispositif selon la revendication précédente, **caractérisé en ce que** les catalyseurs de la pluralité de catalyseurs se présentent sous la forme de sphères et/ou d'étoiles et/ou de bâtonnets partiellement et/ou totalement recouverts par ledit élément photo-catalyseur (102).

11. Dispositif selon l'une quelconque des revendications précédentes, **caractérisé en ce que** l'élément photo-catalyseur (102) comporte une jonction entre un matériau dopé d'un premier type (102a) et un matériau dopé d'un deuxième type (102b) opposé au premier type afin de permettre l'extraction des électrons générés en son sein, notamment par le plasmon, vers la surface extérieure (103) dudit élément photo-catalyseur (102).

12. Dispositif selon l'une quelconque des revendications précédentes, **caractérisé en ce que** l'élément photo-catalyseur (102) comporte au moins un matériau d'oxyde métallique choisi parmi : un oxyde de titane, un oxyde de fer ou un oxyde de cuivre.

13. Dispositif selon l'une quelconque des revendications précédentes, **caractérisé en ce que** l'élément d'activation (104) comporte au moins un matériau choisi parmi l'argent ou l'or.

14. Procédé d'utilisation d'un dispositif selon l'une quelconque des revendications précédentes, **caractérisé en ce qu'**il comporte une étape de traitement d'un composé, notamment d'effluents gazeux, par au moins une action de l'élément photo-catalyseur (102) sur ledit composé présent dans l'espace de traitement (101), ladite action étant résultante d'une étape d'exposition de l'élément photo-catalyseur (102) et de l'élément d'activation (104) au rayonnement électromagnétique à la longueur d'onde prédéterminée générant le plasmon se propageant dans ledit élément photo-catalyseur (102).

15. Procédé selon la revendication précédente, **caractérisé en ce que** l'étape de traitement comporte une étape de formation d'un plasma dans l'espace de traitement (101) au cours de la mise en œuvre de l'étape d'exposition au rayonnement électromagnétique à la longueur d'onde prédéterminée et/ou **en ce qu'**il comporte une étape de régénération de l'élément photo-catalyseur (102), ladite étape de régénération étant mise en œuvre par un flash plasma entre deux étapes de traitement.

## Patentansprüche

1. Vorrichtung zur Behandlung (100) einer Verbindung, umfassend einen Raum zum Behandeln (101) der Verbindung, **dadurch gekennzeichnet, dass** sie aufweist:
- ein Photokatalysatorelement (102), wovon eine Außenfläche (103) mindestens teilweise den Raum zum Behandeln (101) begrenzt,
- ein Aktivierungselement (104), das mit dem Photokatalysatorelement (102) derart verbunden ist, um unter der Einwirkung einer elektromagnetischen Strahlung mit einer vorbestimmten Wellenlänge ein Plasmon zu erzeugen, das sich in dem Photokatalysatorelement (102) ausbreitet, wobei das Photokatalysatorelement (102) zwischen dem Aktivierungselement (104) und dem Raum zum Behandeln (101) angeordnet ist,
- ein System zum Erzeugen (107a, 107b) eines Plasmas (108) in dem Raum zum Behandeln (101) mindestens an der Außenfläche (103) des Photokatalysatorelements (102).

2. Vorrichtung nach dem vorhergehenden Anspruch, **dadurch gekennzeichnet, dass** das Aktivierungselement (104) mit der Verbindung nicht in Kontakt ist, wenn dieses in dem Raum zum Behandeln (101) vorhanden ist.

3. Vorrichtung nach einem der vorhergehenden Ansprüche, **dadurch gekennzeichnet, dass** das Photokatalysatorelement (102) und das Aktivierungselement (104) derart ausgebildet sind, dass das Plasmon ein elektrisches Feld erzeugt, das die Erzeugung von Ladungen in einem Kontaktbereich zwischen dem Photokatalysatorelement (102) mit dem Aktivierungselement (104) verstärkt, wobei die Ladungen an einer Stimulation der katalytischen Wirkung des Photokatalysatorelements (102) teilnehmen.

4. Vorrichtung nach einem der vorhergehenden Ansprüche, **dadurch gekennzeichnet, dass** das System zum Erzeugen (107a, 107b) des Plasmas (108) mindestens eine erste Elektrode (107a) und mindestens eine zweite Elektrode (107b) aufweist, die auf beiden Seiten eines Separators (109) angeordnet sind, der mindestens eine Schicht aus einem dielektrischen Material aufweist.

5. Vorrichtung nach dem vorhergehenden Anspruch, **dadurch gekennzeichnet, dass** sie mehrere erste Elektroden (107a), die insbesondere mit Masse verbunden sind, die auf einer gleichen Fläche des Separators (109) angeordnet sind, aufweist, wobei ein Photokatalysatorelement (102), das mit einem Aktivierungselement (104) verbunden ist, zwischen jedem Paar von ersten benachbarten Elektroden (107a) angeordnet ist.

6. Vorrichtung nach Anspruch 4 oder Anspruch 5, **dadurch gekennzeichnet, dass** sie mehrere zweite Elektroden (107b), die insbesondere mit einer elektrischen Hochspannungsquelle verbunden sind, die auf einer gleichen Fläche des Separators (109) angeordnet sind, aufweist, wobei ein Photokatalysatorelement (102), das mit einem Aktivierungselement (104) verbunden ist, zwischen jedem Paar von zweiten benachbarten Elektroden (107b) angeordnet ist.

7. Vorrichtung nach einem der Ansprüche 4 bis 6, **dadurch gekennzeichnet, dass** das Separatorelement (109) ein Element (110) zum Ausbreiten und/oder zum Erzeugen der elektromagnetischen Strahlung aufweist.

8. Vorrichtung nach einem der vorhergehenden Ansprüche, **dadurch gekennzeichnet, dass** das Aktivierungselement (104) in Form einer insbesondere halbtransparenten Folie aus Metall mit einer Dicke zwischen 1 nm und 30 nm vorliegt.

9. Vorrichtung nach einem der Ansprüche 1 bis 7, **dadurch gekennzeichnet, dass** das Aktivierungselement (104) mehrere Katalysatoren, vorzugsweise Metallkatalysatoren, aufweist, die die plasmonischen Eigenschaften während einer Exposition gegenüber der elektromagnetischen Strahlung einer vorbestimmten Wellenlänge anregen.

10. Vorrichtung nach dem vorhergehenden Anspruch, **dadurch gekennzeichnet, dass** die Katalysatoren von den mehreren Katalysatoren in Form von Kugeln und/oder Sternen und/oder Stäbchen, die teilweise und/oder vollständig von dem Photokatalysatorelement (102) bedeckt sind, vorliegen.

11. Vorrichtung nach einem der vorhergehenden Ansprüche, **dadurch gekennzeichnet, dass** das Photokatalysatorelement (102) einen Übergang zwischen einem dotierten Material eines ersten Typs (102a) und einem dotierten Material eines zweiten Typs (102b), der dem ersten Typ entgegengesetzt ist, aufweist, um das Extrahieren von Elektronen, die in seinem Inneren erzeugt werden, insbesondere durch das Plasmon, in Richtung der Außenfläche (103) des Photokatalysatorelements (102) zu ermöglichen.

12. Vorrichtung nach einem der vorhergehenden Ansprüche, **dadurch gekennzeichnet, dass** das Photokatalysatorelement (102) mindestens ein Metalloxid-Material umfasst, das ausgewählt ist aus: einem Titanoxid, einem Eisenoxid oder einem Kupferoxid.

13. Vorrichtung nach einem der vorhergehenden Ansprüche, **dadurch gekennzeichnet, dass** das Aktivierungselement (104) mindestens ein Material umfasst, das ausgewählt ist aus Silber oder Gold.

14. Verfahren zur Verwendung einer Vorrichtung nach einem der vorhergehenden Ansprüche, **dadurch gekennzeichnet, dass** es einen Schritt des Behandelns einer Verbindung, insbesondere von Abgasen, durch mindestens ein Einwirken des Photokatalysatorelements (102) auf die Verbindung, die in dem Raum zum Behandeln (101) vorhanden ist, aufweist, wobei das Einwirken das Ergebnis eines Schritts der Exposition des Photokatalysatorelements (102) und des Aktivierungselements (104) gegenüber der elektromagnetischen Strahlung mit einer vorbestimmten Wellenlänge ist, die das Plasmon erzeugt, das sich in dem Photokatalysatorelement (102) ausbreitet.

15. Verfahren nach dem vorhergehenden Anspruch, **dadurch gekennzeichnet, dass** der Schritt des Behandelns einen Schritt des Bildens des Plasmas in dem Raum zum Behandeln (101) während des Umsetzens des Schritts der Exposition gegenüber der elektromagnetischen Strahlung mit einer vorbestimmten Wellenlänge aufweist und/oder dass es einen Schritt des Regenerierens des Photokatalysatorelements (102) aufweist, wobei der Schritt des Regenerierens durch einen Plasmablitz zwischen zwei Schritten des Behandelns umgesetzt wird.

## Claims

1. Device (100) for treating a compound comprising a space (101) for treating the compound, **characterized in that** it comprises:
- a photocatalyst element (102) an outer surface (103) of which delimits at least partly the treatment space (101),
- an activation element (104) associated with the photocatalyst element (102) so as to generate, under the effect of electromagnetic radiation at a predetermined wavelength, a plasmon that propagates in said photocatalyst element (102), said photocatalyst element (102) being interposed between the activation element (104) and the treatment space (101),
- a system (107a, 107b) for generating a plasma (108) in the treatment space (101) at least at the outer surface (103) of the photocatalyst element (102).

2. Device according to the preceding claim, **characterized in that** the activation element (104) is not in contact with the compound when the latter is present in the treatment space (101).

3. Device according to either one of the preceding claims, **characterized in that** the photocatalyst element (102) and the activation element (104) are arranged so that the plasmon generates an electric field amplifying the generation of charges in an area of contact between the photocatalyst element (102) with said activation element (104), said charges participating in a stimulation of the catalytic effect of said photocatalyst element (102).

4. Device according to any one of the preceding claims, **characterized in that** the system (107a, 107b) for generating the plasma (108) comprises at least one first electrode (107a) and at least one second electrode (107b) positioned on either side of a separator (109) comprising at least one layer of a dielectric material.

5. Device according to the preceding claim, **characterized in that** it comprises a plurality of first electrodes (107a), in particular that are connected to ground, positioned on one and the same face of the separator (109), a photocatalyst element (102) associated with an activation element (104) being positioned between each pair of adjacent first electrodes (107a).

6. Device according to Claim 4 or Claim 5, **characterized in that** it comprises a plurality of second electrodes (107b), in particular that are connected to a high-voltage electrical source, positioned on one and the same face of the separator (109), a photocatalyst element (102) associated with an activation element (104) being positioned between each pair of adjacent second electrodes (107b).

7. Device according to any one of Claims 4 to 6, **characterized in that** the separator element (109) comprises an element (110) for propagating and/or generating said electromagnetic radiation.

8. Device according to any one of the preceding claims, **characterized in that** the activation element (104) is in the form of a film, in particular a semi-transparent film, made of metal having a thickness of between 1 nm and 30 nm.

9. Device according to any one of Claims 1 to 7, **characterized in that** the activation element (104) comprises a plurality of catalysts, preferably metallic catalysts, enhancing plasmonic properties during exposure to said electromagnetic radiation of predetermined wavelength.

10. Device according to the preceding claim, **characterized in that** the catalysts of the plurality of catalysts are in the form of spheres and/or stars and/or rods that are partially and/or completely covered by said photocatalyst element (102).

11. Device according to any one of the preceding claims, **characterized in that** the photocatalyst element (102) comprises a junction between a doped material of a first type (102a) and a doped material of a second type (102b) opposite to the first type in order to enable the extraction of the electrons generated within it, in particular by the plasmon, towards the outer surface (103) of said photocatalyst element (102).

12. Device according to any one of the preceding claims, **characterized in that** the photocatalyst element (102) comprises at least one metal oxide material chosen from: a titanium oxide, an iron oxide or a copper oxide.

13. Device according to any one of the preceding claims, **characterized in that** the activation element (104) comprises at least one material chosen from silver or gold.

14. Process for using a device according to any one of the preceding claims, **characterized in that** it comprises a step of treating a compound, in particular gaseous effluents, by at least one action of the photocatalyst element (102) on said compound present in the treatment space (101), said action being the result of a step of exposing the photocatalyst element (102) and the activation element (104) to the electromagnetic radiation at the predetermined wavelength generating the plasmon that propagates in said photocatalyst element (102).

15. Process according to the preceding claim, **characterized in that** the treatment step comprises a step of forming a plasma in the treatment space (101) during the implementation of the step of exposure to the electromagnetic radiation at the predetermined wavelength and/or **in that** it comprises a step of regenerating the photocatalyst element (102), said regeneration step being carried out by a flash plasma between two treatment steps.
